# EUROPÄISCHE PATENTSCHRIFT

(11) **EP 1 882 115 B1**
(45) Veröffentlichungstag und Bekanntmachung des Hinweises auf die Patenterteilung: **15.10.2008**
(21) Anmeldenummer: 06753649.0
(22) Anmeldetag: 16.05.2006
(51) Int. Cl.: F16H 3/54, B60K 17/346

(54) **SCHRÄGVERZAHNTES SCHALTBARES PLANETENGETRIEBE UND VERTEILERGETRIEBE FÜR KRAFTFAHRZEUGE MIT EINEM SOLCHEN**
SHIFTABLE HELICAL PLANETARY TRANSMISSION AND POWER DIVIDER FOR MOTOR VEHICLES COMPRISING SAID TRANSMISSION
TRAIN PLANETAIRE ENCLENCHABLE A DENTURE OBLIQUE ET BOITE DE TRANSFERT DESTINEE A UN VEHICULE COMPORTANT UN TEL TRAIN PLANETAIRE

(30) Priorität: 17.05.2005 AT 3262005 U
(43) Veröffentlichungstag der Anmeldung: 30.01.2008
(73) Patentinhaber: Magna Powertrain AG & Co. KG, 8502 Lannach (AT)
(72) Erfinder: GLASSNER, Rudolf, A-3623 Kottes (AT)
(74) Vertreter: Fries, Oliver
(86) Internationale Anmeldenummer: PCT/EP2006/004617
(87) Internationale Veröffentlichungsnummer: WO 2006/122753

(56) Entgegenhaltungen:
- EP-A- 0 239 555
- EP-A- 0 916 872
- EP-A- 1 495 900
- WO-A-01/01016
- US-A- 5 695 426
- US-A- 5 871 415
- US-A1- 2003 040 393
- US-A1- 2004 242 369

## Beschreibung

Die Erfindung betrifft ein schrägverzahntes schaltbares Planetengetriebe, bestehend aus einem Gehäuse, einem Sonnenrad, einem Planetenträger mit schrägverzahnten Planetenrädern und einem axial verschiebbaren Hohlrad, das wahlweise mit dem Gehäuse oder einem der beiden anderen Glieder des Planetengetriebes, insbesondere dem Planetenträger, kuppelbar ist. Auf diese Weise wird bei Einsatz in einem Kraftfahrzeug beispielsweise zwischen einem Straßengang und einem Geländegang gewählt. Es kann sich aber auch um die Endstufe eines Nutzfahrzeuggetriebes handeln. Aus Gründen der Geräuschentwicklung sind schrägverzahnte Getriebe bevorzugt. Diese aber haben den Nachteil, dass die durch die Schrägverzahnung entstehenden Axialkräfte abgestützt werden müssen. Bei den Planetenrädern kann das über eine geeignete Lagerung erfolgen. Bei nicht schaltbaren Planetengetrieben erfolgt die Abfuhr über die Lager der anschließenden Wellen.

Bei schaltbaren Planetengetrieben gibt es zwei Möglichkeiten: Entweder das Hohlrad ist nicht verschiebbar und von einer verschiebbaren Schaltmuffe umgeben. Dann muss das Hohlrad in axialer Richtung gelagert sein, was wegen dessen großen Durchmessers nicht möglich ist. Oder das Hohlrad selbst ist verschiebbar, was nebstbei auch Bauraum und Kosten spart. Dann aber muss das Hohlrad in seiner jeweiligen Schaltstellung axial fixiert werden.

Aus der EP 916 872 B1, die alle Merkmale des Oberbegriffes des Anspruchs 1 offenbart, ist es bekannt, zur Arretierung eines schrägverzahnten Hohlrades in axialer Richtung ebenso schräge Zähne als Haltezähne einzusetzen, die mit entsprechenden Haltezähnen zusammenwirken. Die auf die Schrägverzahnung wirkende Umfangskraft erzeugt an den Haltezähnen eine der auf das Hohlrad wirkenden Axialkraft entgegengesetzte Axialkraft. Nachteilig ist daran der Bedarf an Bauraum in Axialrichtung. Weiters ist die Halteverzahnung aufwändig in der Fertigung und eine Synchronisierung schwierig unterzubringen.

Es ist somit Aufgabe der Erfindung, bei einem gattungsgemäßen Planetengetriebe eine Arretierung zu schaffen, die wenig Bauraum braucht, einfach zu fertigen ist und die Freiheit des Konstrukteurs weniger einschränkt, wobei sie natürlich sämtlichen funktionellen Anforderungen genügen muss.

Erfindungsgemäß wird das mit den Maßnahmen a) bis c) des ersten Anspruches erreicht. Zum Unterschied von der EP 916 872 B1 wird die auf die Schrägverzahnung wirkende Umfangskraft an die Kuppelzähne weitergeleitet, wo sie dank dem Zusammenwirken der sanft ansteigenden ersten Flanken in einer achsnormalen Ebene liegende Kräfte erzeugt. Diese auf die ersten Flanken wirkenden Normalkräfte bewirken einen der Umfangskraft proportionalen Reibschluss zwischen den ersten Flanken. Dieser Reibschluss verhindert ein Verschieben des Hohlrades durch die von der Schrägverzahnung herrührenden Axialkraft. Dadurch, dass die Flanken axial ausgerichtet sind, kann das Hohlrad leicht, ja sogar im Stillstand, in die jeweilige Schaltstellung gebracht werden.

Konstruktiv besonders günstige Verhältnisse herrschen, wenn es von dem einem der beiden anderen Glieder des Planetengetriebes der Planetenträger ist, der mit dem axial verschiebbaren Hohlrad kuppelbar ist (Anspruch 2).

Obwohl es auch umgekehrt ginge, ragen vorzugsweise die ersten Kuppelzähne nach innen und die zweiten Kuppelzähne nach aussen (Anspruch 3) und hat der Teilkreis der ersten und zweiten Kuppelzähne einen größeren Radius als der Teilkreis der Laufverzahnung des Hohlrades (Anspruch 4). Beides vereinfacht die Bearbeitung beider die Kuppelzähne tragenden Bauteile und spart letztlich Bauraum.

In einer vorteilhaften Umsetzung beträgt der Neigungswinkel der sanft ansteigenden Flanken bezüglich einer Tangente an den Teilkreis bei einem Schrägungswinkel der Laufverzahnung von 11 Graden 25 bis 30 Grad (Anspruch 5). Um den Umfang der mit den Kuppelzähnen ausgestatteten Bauteile maximal auszunutzen, folgt bei den ersten und zweiten Kuppelzähnen auf die sanft ansteigende Flanke eine steil abfallende zweite Flanke (Anspruch 6). Der Neigungswinkel der steil abfallenden Flanken beträgt 45 bis 62 Grad (Anspruch 7). Wegen der Schrägverzahnung wird der erfindungsgemäße Effekt nur in einem Drehsinn gebraucht, beim entgegengesetzten Drehsinn wird das Hohlrad sowieso ohne Relativdrehung an einen Bauteil gedrückt.

Zur Verfeinerung der Erfindung haben die ersten und die zweiten Kuppelzähne stirnseitig (im Umfangsschnitt) dachförmige Begrenzungsflächen (Anspruch 8) und weisen die Flanken einen Hinterschnitt mit einem Winkel von 1 bis 5 Grad auf (Anspruch 9). Ersteres erleichtert das Eintreten der ersten Kuppelzähne in die zweiten Kuppelzähne. Der Hinterschnitt bringt zusätzliche Sicher-heit gegen Herausspringen des Ganges bei starken Stößen.

Zur Schonung der ersten Flanken der zusammenwirkenden Kuppelzähne können diese im achsnormalen Schnitt leicht konvex beziehungsweise leicht konkav ausgebildet sein (Anspruch 10,11).

Vorzugsweise sind die am Gehäuse und am Planetenträger rundum im achsnormalen Schnitt sägezahnartig ausgebildeten zweiten Kuppelzähne an einem Zahnring ausgebildet (Anspruch 12). Das erleichtert Bearbeitung und Einbau in ein Getriebegehäuse, wobei die Ringe sogar Gleichteile sein können.

Die Erfindung betrifft auch ein Verteilergetriebe mit einem schrägverzahnten schaltbaren Planetengetriebe nach einem der vorhergehenden Ansprüche, bei dem der Antrieb über das Sonnenrad und der Abtrieb über den Planetenträger erfolgt und die sägezahnartig ausgebildeten zweiten Kuppelzähne zur Schaffung eines Straßenganges am Planetenträger und zur Schaffung eines Geländeganges am Gehäuse angebracht sind (Anspruch 13).

Im folgenden wird die Erfindung anhand von Abbildungen beschrieben und erläutert. Es stellen dar:
- Fig. 1:: Ein Verteilergetriebe mit dem erfindungsgemäßen Planetengetriebe im Längsschnitt,
- Fig. 2:: Schnitt nach AA in Fig. 1,
- Fig. 3:: Detail X in Fig. 2, als Ansicht nach Pfeil A in Fig. 1,
- Fig. 4:: Detail IV in Fig. 1,
- Fig. 5:: Ansicht nach A in Fig. 4,
- Fig. 6:: Ansicht nach C in Fig. 5,
- Fig. 7:: Ansicht nach B in Fig. 4.

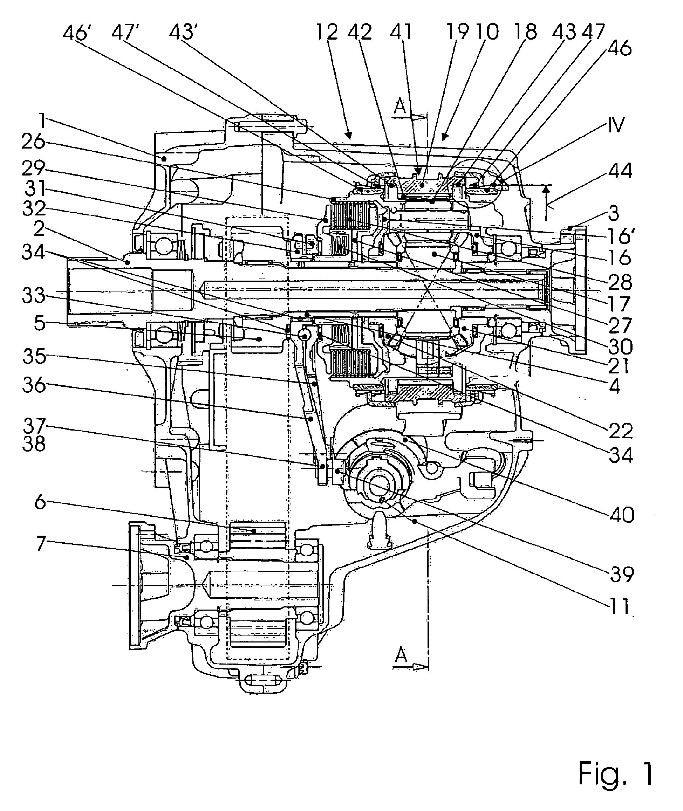

In **Fig. 1** ist das Gehäuse eines Verteilergetriebes insgesamt mit 1 bezeichnet, eine von der nicht dargestellten Antriebseinheit des Fahrzeuges kommende Eingangswelle mit 2, eine mit der Hinterachse antriebsverbundene erste Ausgangswelle mit 3 und eine mit der ebenfalls nicht dargestellten Vorderachse antriebsverbundene zweite Ausgangswelle mit 4. Die zweite Ausgangswelle 4 treibt mittels eines ersten Zahnriemenrades 5 ein zweites Zahnriemenrad 6 unter der Eingangswelle 2, welches auf einer Abtriebswelle 7 für den Antrieb der Vorderachse sitzt.

Zur Verteilung des Drehmomentes auf die beiden Ausgangswellen 3,4 ist ein summarisch mit 10 bezeichnetes Differentialgetriebe vorgesehen. Weiters ist eine Steuereinheit 11 unter dem Differentialgetriebe 10 und eine Sperrkupplung 12 zum Sperren des Differentialgetriebes 10 vorgesehen. In dem gezeigten Ausführungsbeispiel ist die Sperrkupplung baulich mit dem Differentialgetriebe 10 vereint. Sie könnte aber auch getrennt, ja sogar irgendwo anders im Verteilergetriebe bzw. im Antriebszug angeordnet sein. Auch das Differentialgetriebe selbst kann im Rahmen der Erfindung sehr verschieden ausgebildet sein.

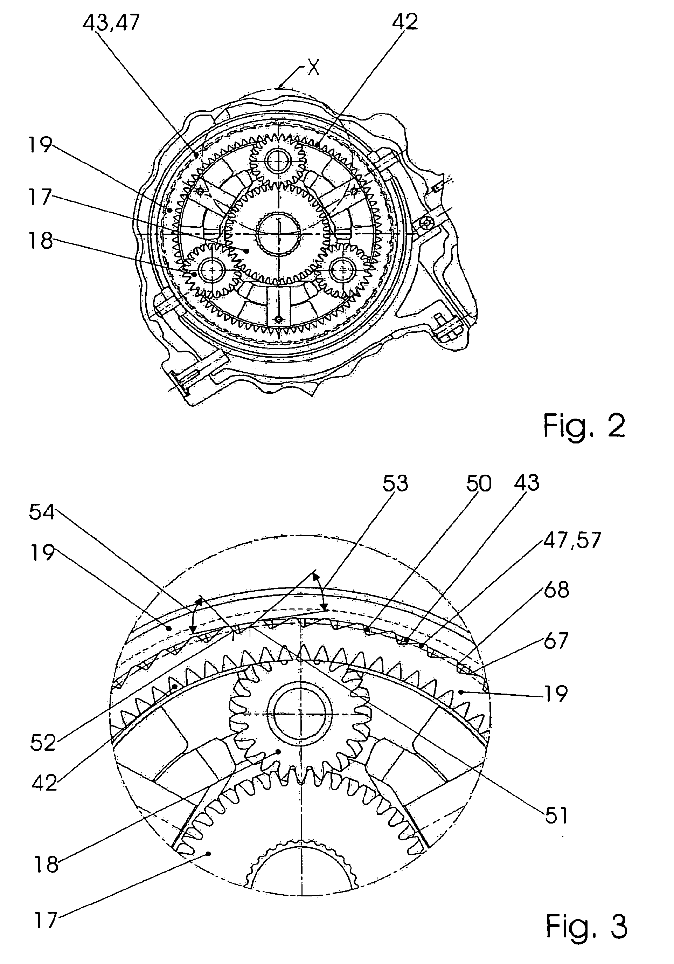

In den **Fig. 1** und **Fig. 2** ist eine beispielsweise und besondere Ausführung des Differentialgetriebes erkennbar. Im Inneren des Differentialgehäuses 16, das hier gleichzeitig als Planetenträger dient, befindet sich ein drehfest mit der Eingangswelle 2 verbundenes Sonnenrad 17, im Differentialgehäuse 16 drehbar gelagerte Planetenräder 18 der Geländegangstufe sowie erste Ausgleichsräder 21 und zweite Ausgleichsräder 22. Erstere (21) sind mit der ersten Ausgangswelle 3 und zweitere (22) sind mit der zweiten Ausgangswelle 4 drehfest verbunden. Das Differentialgehäuse 16 ist von einem Hohlrad 19 umgeben, das axial verschiebbar und im Geländegang mit dem Differentialgehäuse 16 drehfest verbunden ist. Diese besondere Ausführungsform des Differentialgetriebes 10 ist Gegenstand des österreichischen Patentes 405 157 und dort in Bau- und Funktionsweise ausführlicher beschrieben.

In **Fig. 1** ist auch die Sperrkupplung 12 im Detail dargestellt. Sie besteht aus einem Kupplungsgehäuse 26, das mit dem Differentialgehäuse 16 fest verbunden bzw. hier sogar einstückig ist, einem Kupplungsinnenteil 27 der drehfest mit der zweiten Ausgangswelle 4 verbunden ist, einem Lamellenpaket 28, und einer Andruckplatte 29, die von Rückholfedern 30 in Öffnungsrichtung beaufschlagt ist. Zwischen der Andruckplatte 29 und der zweiten Ausgangswelle, hier insbesondere dem auf dieser sitzenden ersten Zahnriemenrad 5 sind zwei Ringe 31,32 angeordnet. Zwischen diesen Ringen 31,32 befinden sich in entsprechenden Umfangsrillen Kugeln 33. Diese Umfangsrillen sind in einem der Ringe, oder in beiden, als Rampen ausgebildet, sodass bei Relativdrehung der beiden Ringe gegeneinander durch Auflaufen der Kugel auf der Rampe eine Axialkraft erzeugt wird. Die beiden Ringe 31,32 stehen ganz still, wenn die Kupplung nicht betätigt wird. Zur Drehentkopplung sind daher beide Ringe 31,32 auf Nadellagern 34 gelagert. Der erste Ring 31 besitzt einen ersten Rampenhebel 35, der zweite Ring 32 einen zweiten (36), welche mit einem Ende fest mit dem Ring verbunden sind, nach unten ragen und an ihren freien Enden 37,38 Rollen 39 besitzen. Zwischen den beiden Rollen 39 befindet sich eine drehbare Steuerscheibe 40. Bei Verdrehen dieser Steuerscheibe werden die Rollen 39 auseinanderbewegt und über die scherenartig bewegten Rampenhebel 35,36 die Ringe 31,32 gegeneinander verdreht. Das Differentialgetriebe 10 ist in diesem Ausführungsbeispiel mit dem Planetengetriebe für die Bildung eines Geländeganges baulich vereint, was jedoch für die Erfindung unwesentlich ist.

Die Erfindung betrifft nur das Planetengetriebe, das im Wesentlichen aus dem Sonnenrad 17, dem Planetenträger 16,16' mit den Planetenrädern 18 und dem Hohlrad 19 besteht (siehe auch Fig. 2). Die Räder 17,18 und 19 sind schrägverzahnt und das Hohlrad 19 ist in axialer Richtung verschiebbar, nach links im Straßengang, nach rechts im Geländegang.

Das Hohlrad 19 hat eine Umfangsnut 41 für den Eingriff einer in Fig.2 angedeuteten Schaltgabel, mittels derer es in die eine oder andere Schaltstellung verschoben wird. In Fig. 1 befindet es sich in Neutralstellung. Um das Hohlrad 19 in der jeweiligen Schaltstellung gegen die durch die schräge Laufverzahnung ausgeübte Axialkraft festzuhalten, ist auf dessen beiden Stirnseiten je eine Kuppelverzahnung 43, 43' vorgesehen. Sie verläuft im Hohlrad 19 rundum und erstreckt sich nach innen, ist also eine Art Innenverzahnung. Sie ist auf einem größeren Radius 44 als der Radius der Laufverzahnung 42 angeordnet. Auf der im Bild rechten Seite des Hohlrades 19 ist im Gehäuse 1 ein Zahnring 46 befestigt, beispielsweise eingepresst. Ebenso ist an der linken Seite ein Zahnring 46' fest mit dem Planetenträger 16' verbunden. Die beiden Zahnringe 46, 46' haben ebenfalls eine Kuppelverzahnung 47,47', die in den beiden Gängen mit der jeweiligen Kuppelverzahnung 43, 43' zusammenwirkt. Die Kuppelverzahnungen 43, 43' und 47,47' sind wie im folgenden auszuführen, erfindungsgemäß besonders gestaltet.

In **Fig. 2** und größer in **Fig. 3** ist die Kuppelverzahnung 43 bzw 47 besser zu erkennen, strichliert im Schnitt der Fig. 2, als Kuppelverzahnung 43' bzw 47' in Volllinie in der Ansicht der Fig. 3. Die beiderseitigen Kuppelverzahnungen sind identisch und zueinander spiegelverkehrt. Deshalb sind sie nur für die Kuppelverzahnung 43 und 47 beschrieben. Die einwärts gerichteten Kuppelzähne 50 der Kuppelverzahnung 43 sind im achsnormalen Schnitt sägezahnförmig, sie bestehen aus einer sanft ansteigenden Flanke 51 und einer steil abfallenden Flanke 52. Erstere schließt mit einer Tangente an deren Teilkreis einen Winkel 53 von ungefähr 25 bis 30 Grad ein, zweitere einen Winkel 54 von ungefähr 45 bis 62 Grad. Die nach außen gerichteten Kuppelzähne 57 des Zahnringes 46 haben dieselbe Kontur. Sie haben eine sanft ansteigende Flanke 67 und eine steile Flanke 68.

Wirkt auf das Hohlrad 19 eine Umfangskraft (in Fig. 3) gegen den Uhrzeigersinn, so werden die sanft ansteigenden Flanken 51 der Kuppelzähne 50 und 57 aneinander gepresst. Durch den relativ spitzen Winkel 53 entsteht dabei eine sehr hohe Flächenpressung und dadurch weiter ein Reibschluss, der das Hohlrad 19 am gehäusefesten Zahnring 46 festhält. Im Schleppbetrieb, das heißt, bei Motorbremsung, wirkt die Axialkraft in der entgegengesetzten Richtung und das Hohlrad 19 wird gegen den Zahnring 46 gedrückt, wobei sich dessen Stirnfläche 58 an ihn anlegt. Das Hohlrad 19 hält sich so selbst in gekuppelter Stellung. Im Straßengang greift das Hohlrad 19 links mit seiner Kuppelverzahnung 43' in die Kuppelverzahnung 47' des Zahnringes 46' ein. Da in diesem Fall das Drehmoment in der entgegengesetzten Richtung wirkt, sind die Kuppelverzahnungen 43', 47' auf dieser Seite spiegelverkehrt. Das bedeutet auch, dass der Zahnring 46' mit dem Zahnring 46 auf der anderen Seite baugleich sein kann.

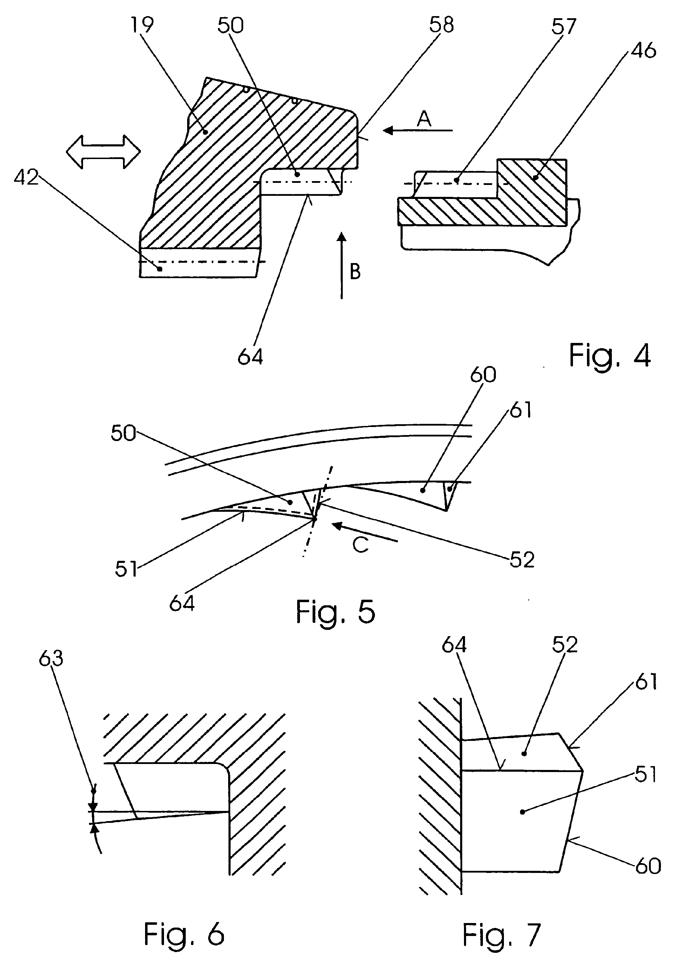

**Fig. 4, 5** und **7** zeigen die Kuppelzähne 50, 57 im Detail. Die beiden Flanken 51, 52 schneiden sich in einer Linie 64, die parallel zur Drehachse des Planetengetriebes ist. Die Kuppelzähne 50 haben an ihren Stirnseiten schräge Dachflächen 60, 61, die eine Zahn-auf-Zahn-Stellung beim Einkuppeln verhindern. Die Flanken 51, 52 sind im Prinzip ebene Flächen, jedoch kann die sanft ansteigende Flanke 51 konkav beziehungsweise konvex sein, was in Fig. 5 zu sehen ist. Hier sind die Kuppelzähne 50 der Kuppelverzahnung 43 mit konkaven und entsprechend die Kuppelzähne 57 der Kuppelverzahnung 47 konvexen Flanken 51,52 ausgebildet.

**Fig. 6** schließlich zeigt, dass die Kuppelzähne 50, 57 auch hinterschnitten sein können. Der Hinterschnittwinkel 63 braucht nur einige Grade, beispielsweise zwei Grad, betragen.

## Patentansprüche

1. Schrägverzahntes schaltbares Planetengetriebe, bestehend aus einem Gehäuse (1), einem Sonnenrad (17), einem Planetenträger (16) mit schrägverzahnten Planetenrädern (18) und einem axial verschiebbaren Hohlrad (19), das wahlweise mit dem Gehäuse (1) oder einem der beiden anderen Glieder (17; 16) des Planetengetriebes kuppelbar ist,
**dadurch gekennzeichnet, dass**
a) beiderseits an den Stirnseiten des Hohlrades (19) rundum im achsnormalen Schnitt sägezahnartig ausgebildete erste Kuppelzähne (50) angeordnet sind, die axial ausgerichtet sind und eine sanft ansteigende erste Flanke (51) haben,
b) am Gehäuse (1) und an dem einen der beiden anderen Glieder (17; 16) des Planetengetriebes, rundum im achsnormalen Schnitt sägezahnartig ausgebildete zweite Kuppelzähne (57) angeordnet sind, die axial ausgerichtet sind, eine sanft ansteigende erste Flanke (67) haben und in die Lücken der ersten Kuppelzähne (50) passen,
c) sodass in der jeweiligen Schaltstufe die auf das Hohlrad (19) wirkenden Umfangskräfte die sanft ansteigenden ersten Flanken (51) der ersten Kuppelzähne (50) gegen die sanft ansteigenden ersten Flanken (67) der zweiten Kuppelzähne (57) am Gehäuse (1) beziehungsweise an dem einen der beiden anderen Glieder (17; 16) des Planetengetriebes pressen und das Hohlrad (19) so in seiner jeweiligen eingerückten Stellung festhalten.

2. Schrägverzahntes schaltbares Planetengetriebe nach Anspruch 1, **dadurch gekennzeichnet, dass** von einem der beiden anderen Glieder (17; 16) des Planetengetriebes der Planetenträger (16) mit dem axial verschiebbaren Hohlrad (19) kuppelbar ist.

3. Schrägverzahntes schaltbares Planetengetriebe nach Anspruch 1, **dadurch gekennzeichnet, dass** die ersten Kuppelzähne (50) nach innen und die zweiten Kuppelzähne (57) nach aussen ragen.

4. Schrägverzahntes schaltbares Planetengetriebe nach Anspruch 1, **dadurch gekennzeichnet, dass** der Teilkreis der ersten und zweiten Kuppelzähne (50,57) einen größeren Radius (44) als der Teilkreis der Laufverzahnung (42) des Hohlrades (19) hat.

5. Schrägverzahntes schaltbares Planetengetriebe nach Anspruch 1, **dadurch gekennzeichnet, dass** der Neigungswinkel (53) der sanft ansteigenden Flanken (51, 67) bei einem Schrägungswinkel der Laufverzahnung (42) des Hohlrades (19) von 9 bis 12 Graden 25 bis 30 Grad beträgt.

6. Schrägverzahntes schaltbares Planetengetriebe nach Anspruch 1, **dadurch gekennzeichnet, dass** erste und zweite Kuppelzähne (50,57) auf die sanft ansteigende Flanke (51,67) folgend eine steil abfallende zweite Flanke (52,68) haben.

7. Schrägverzahntes schaltbares Planetengetriebe nach Anspruch 6, **dadurch gekennzeichnet, dass** der Neigungswinkel (54) der steil abfallenden Flanken 45 bis 62 Grad beträgt.

8. Schrägverzahntes schaltbares Planetengetriebe nach Anspruch 1, **dadurch gekennzeichnet, dass** die ersten und die zweiten Kuppelzähne (50,57) stirnseitig dachförmige Begrenzungsflächen (60,61) haben.

9. Schrägverzahntes schaltbares Planetengetriebe nach Anspruch 1, **dadurch gekennzeichnet, dass** die sanft ansteigende erste Flanke (51,67) und eine steil abfallende zweite Flanke einen Hinterschnitt mit einem Winkel (63) von 1 bis 5 Grad aufweisen.

10. Schrägverzahntes schaltbares Planetengetriebe nach Anspruch 1, **dadurch gekennzeichnet, dass** die sanft ansteigende erste Flanke (51) der ersten Kuppelzähne (50) im achsnormalen Schnitt konvex und die sanft ansteigende erste Flanke (67) der zweiten Kuppelzähne (57) konkav ausgebildet sind.

11. Schrägverzahntes schaltbares Planetengetriebe nach Anspruch 1, **dadurch gekennzeichnet, dass** die sanft ansteigende erste Flanke (51) der ersten Kuppelzähne (50) im achsnormalen Schnitt konkav und die sanft ansteigende erste Flanke (67) der zweiten Kuppelzähne (57) konvex ausgebildet sind.

12. Schrägverzahntes schaltbares Planetengetriebe nach Anspruch 2, **dadurch gekennzeichnet, dass** die am Gehäuse (1) und am Planetenträger (16) rundum im achsnormalen Schnitt sägezahnartig ausgebildeten zweiten Kuppelzähne an einem Zahnring (46,46') ausgebildet sind.

13. Verteilergetriebe mit einem schrägverzahnten schaltbaren Planetengetriebe nach einem der vorhergehenden Ansprüche, **dadurch gekennzeichnet, dass** der Antrieb über das Sonnenrad (17) und der Abtrieb über den Planetenträger (16) erfolgt und dass die sägezahnartig ausgebildeten zweiten Kuppelzähne (57) zur Schaffung eines Straßenganges am Planetenträger (16) und zur Schaffung eines Geländeganges am Gehäuse (1) angebracht sind.

## Claims

1. A helical shiftable planetary transmission consisting of a housing (1), a sun gear (17), a planet carrier (16) with helical planet gears (18) and of an axially displaceable annulus gear (19) which can be coupled selectively to the housing (1) or to one of the two other members (17; 16) of the planetary transmission,
**characterized in that**
a) first coupling teeth (50) are arranged at both sides all around the end faces of the annulus gear (19), are of sawtooth shape in the section normal to the axis, are axially directed and have a gently rising first flank (51);
b) second coupling teeth (57) are arranged at the housing (1) and at the one of the two other members (17; 16) of the planetary transmission, are of sawtooth shape all around in the section normal to the axis, are axially directed, have a gently rising first flank (67) and fit into the gaps of the first coupling teeth (50);
c) so that, in the respective shift ratio, the peripheral forces acting on the annulus gear (19) press the gently rising first flanks (51) of the first coupling teeth (50) against the gently rising first flanks (67) of the second coupling teeth (57) at the housing (1) or at the respective one of the two other members (17; 16) of the planetary transmission and thus fix the annulus gear (19) in its respective engaged position.

2. A helical shiftable planetary transmission in accordance with claim 1, **characterized in that** of one of the two other members (17; 16) of the planetary transmission the planet carrier (16) can be coupled to the axially displaceable annulus gear (19).

3. A helical shiftable planetary transmission in accordance with claim 1, **characterized in that** the first coupling teeth (50) project inwardly and the second coupling teeth (57) project outwardly.

4. A helical shiftable planetary transmission in accordance with claim 1, **characterized in that** the pitch circle of the first and second coupling teeth (50, 57) has a larger radius (44) than the pitch circle of the running teeth (42) of the annulus gear (19).

5. A helical shiftable planetary transmission in accordance with claim 1, **characterized in that** the angle of inclination (53) of the gently rising flanks (51, 67) amounts to 25 to 30 degrees with a helical angle of the running teeth (42) of the annulus gear (19) of 9 to 12 degrees.

6. A helical shiftable planetary transmission in accordance with claim 1, **characterized in that** first and second coupling teeth (50, 57) have a steeply falling second flank (52, 68) following the gently rising flank (51, 67-)

7. A helical shiftable planetary transmission in accordance with claim 6, **characterized in that** the angle of inclination (54) of the steeply falling flanks amounts to 45 to 62 degrees.

8. A helical shiftable planetary transmission in accordance with claim 1, **characterized in that** the first and the second coupling teeth (50, 57) have roof-shaped boundary surfaces (60, 61) at the end face.

9. A helical shiftable planetary transmission in accordance with claim 1, **characterized in that** the gently rising first flank (51, 67) and a steeply falling second flank have an undercut with an angle (63) of 1 to 5 degrees.

10. A helical shiftable planetary transmission in accordance with claim 1, **characterized in that**, in the section normal to the axis, the gently rising first flank (51) of the first coupling teeth (50) is convex and the gently rising first flank (67) of the second coupling teeth (57) is concave.

11. A helical shiftable planetary transmission in accordance with claim 1, **characterized in that**, in the section normal to the axis, the gently rising first flank (51) of the first coupling teeth (50) is concave and the gently rising first flank (67) of the second coupling teeth (57) is convex.

12. A helical shiftable planetary transmission in accordance with claim 2, **characterized in that** the second coupling teeth formed all around the housing (1) and the planet carrier (16) in the manner of sawteeth in the section normal to the axis are formed at a toothed ring (46, 46').

13. A transfer case having a helical shiftable planetary transmission in accordance with any one of the preceding claims,
**characterized in that**
the input drive takes place via the sun gear (17) and the output drive via the planet carrier (16); and **in that** the second coupling teeth (57) made in the manner of sawteeth are attached to the planet carrier (16) to provide a road gear and to the housing (1) to provide an offroad gear.

## Revendications

1. Train planétaire commutable à denture oblique, constitué par un boîtier (1), une roue solaire (17), un porte-planétaires (16) avec des pignons planétaires (18) à denture oblique et une couronne de train planétaire (19) déplaçable axialement, qui peut être accouplée au choix avec le boîtier (1) ou avec l'un des deux autres organes (17 ; 16) du train planétaire,
**caractérisé en ce que**
a) des premières dents d'accouplement (50), réalisées en dents de scie en coupe normale à l'axe sur tout le pourtour, sont agencées des deux côtés sur les faces frontales de la couronne de train planétaire (19) lesquelles sont orientées axialement et possèdent un premier flanc (51) montant en pente douce,
b) des deuxièmes dents d'accouplement (57) réalisées en dents de scie en coupe normale à l'axe sur tout le pourtour, sont agencées sur le boîtier (1) et sur ledit un des deux autres organes (17 ; 16) du train planétaire, lesquelles sont orientées axialement, possèdent un premier flanc (57) montant en pente douce et qui s'insèrent dans les entredents des premières dents d'accouplement (50),
c) de telle sorte qu'à l'étage de commutation respectif, les forces périphériques agissant sur la couronne de train planétaire (19) pressent les premiers flancs (51) montant en pente douce, des premières dents d'accouplement (50) contre les premier flancs (67) montant en pente douce, des deuxièmes dents d'accouplement (57) sur le boîtier (1) ou sur ledit au moins un des deux autres organes (17 ; 16) du train planétaire et retiennent la couronne planétaire (19) de cette manière dans sa position engrenée respective.

2. Train planétaire commutable à denture oblique selon la revendication 1, **caractérisé en ce que** le porte-planétaire (16) peut être accouplé à la couronne de train planétaire (19) axialement déplaçable par un des deux autres organes (17 ; 16) du train planétaire.

3. Train planétaire commutable à denture oblique selon la revendication 1, **caractérisé en ce que** les premières dents d'accouplement (50) font saillie vers l'intérieur et les deuxièmes dents d'accouplement (57) font saillie vers l'extérieur.

4. Train planétaire commutable à denture oblique selon la revendication 1, **caractérisé en ce que** les cercle primitif des premières et deuxièmes dents d'accouplement (50, 57) ont un rayon (44) plus grand que le cercle primitif de la denture d'entraînement (42) de la couronne de train planétaire (19).

5. Train planétaire commutable à denture oblique selon la revendication 1, **caractérisé en ce que** l'angle d'inclinaison (53) des flancs (51, 67) montant en pente douce est de 25 à 30 degrés lorsque l'angle d'hélice de la denture d'entraînement (42) de la couronne de train planétaire (19) est de 9 à 12 degrés.

6. Train planétaire commutable à denture oblique selon la revendication 1, **caractérisé en ce que** des premières et deuxièmes dents d'accouplement (50, 57) possèdent à la suite du flanc montant en pente douce (51, 67), un deuxième flanc (52, 68) tombant en pente raide.

7. Train planétaire commutable à denture oblique selon la revendication 6, **caractérisé en ce que** l'angle d'inclinaison (54) des flancs tombant en pente raide est de 45 à 62 degrés.

8. Train planétaire commutable à denture oblique selon la revendication 1, **caractérisé en ce que** les premières et deuxièmes dents d'accouplement (50, 57) ont sur la face frontale des surfaces de limitation (60, 61) en forme de toit.

9. Train planétaire commutable à denture oblique selon la revendication 1, **caractérisé en ce que** le premier flanc (51, 67) montant en pente douce et un deuxième flanc tombant en pente raide présente une contre-dépouille avec un angle (63) de 1 à 5 degrés.

10. Train planétaire commutable à denture oblique selon la revendication 1, **caractérisé en ce que** le premier flanc (51) montant en pente douce, des premières dents d'accouplement (50), est réalisé convexe en coupe normale à l'axe, et le premier flanc (67) montant en pente douce, des deuxièmes dents d'accouplement (57), est réalisé concave.

11. Train planétaire commutable à denture oblique selon la revendication 1, **caractérisé en ce que** le premier flanc (51) montant en pente douce, des premières dents d'accouplement (50), est réalisé concave en coupe normale à l'axe et le premier flanc (67) montant en pente douce, des deuxièmes dents d'accouplement (57), est réalisé convexe.

12. Train planétaire commutable à denture oblique selon la revendication 2, **caractérisé en ce que** les deuxièmes dents d'accouplement réalisées en dents de scie en coupe normale à l'axe sur tout le pourtour sur le boîtier (1) et sur le porte-planétaire (16) sont réalisées sur une couronne dentée (46, 46').

13. Boîte de vitesses intermédiaires, comportant un train planétaire commutable à denture oblique selon l'une quelconque des revendications précédentes, **caractérisée en ce que** l'entraînement d'entrée a lieu via la roue solaire (17) et l'entraînement de sortie a lieu via le porte-planétaire (16), et **en ce que** les deuxièmes dents d'accouplement (57) réalisées en dents de scie sont montées sur le boîtier (1) pour créer une vitesse de circulation sur route sur le porte-planétaire (16) et pour créer une vitesse tout terrain sur le boîtier (1).
